# EUROPEAN PATENT APPLICATION

(11) **EP 4 725 469 A1**
(43) Date of publication of application: **15.04.2026**
(21) Application number: 23921591.6
(22) Date of filing: 27.06.2023
(51) Int. Cl.: A61H 7/00

(54) **MASSAGE DEVICE CAPABLE OF REPLACING MASSAGE HEAD**

(30) Priority: 06.06.2023 CN 202310660351
(71) Applicant: Shenzhen S-Hande Technology Co., Ltd., Shenzhen, Guangdong 518000 (CN)
(72) Inventor: HE, Jing, Shenzhen, Guangdong 518000 (CN)
(74) Representative: Herrero & Asociados, S.L.
(86) International application number: PCT/CN2023/102601
(87) International publication number: WO 2024/212354

(57) **Abstract**

The present disclosure relates to a massage device with a replaceable massage head thereof, which includes a housing with an opening formed at least one end thereof; a seat arranged at the opening and including a hollow receiving room arranged thereon; a connecting member hermetically arranged at a bottom of the receiving room; a massage head detachably arranged on the seat and detachably connected with the connecting member; a driving member received in the housing and connected with the connecting member to drive the connecting member to partially reciprocate up and down. The massage head can be detachably installed on the seat, so that users can replace the massage heads in different modes according to the needs by disassembling the massage head, so that the massage device can provide different massage functions to meet different needs, with a strong practicality.

## Description

### BACKGROUND

### 1. Technical Field

The present disclosure generally relates to the technical field of massage devices, and especially relates to a massage device with a replaceable massage head thereof.

### 2. Description of Related Art

With a continuous improvement of living standards, health care and health consciousness of people has been greatly enhanced, and more and more massage products for health care have been applied, and a massage device as one of massage products for health care, is generally configured to perform massage on skins and muscle tissues of human bodies by methods such as vibration and tapping etc.

In the conventional technology, the massage device is provided with a massage heads installed on the outside of the massage device, but most of the massage heads and the massage devices are non-removable to each other, which is impossible to replace different styles of massage heads, resulting in a relatively single use thereof.

Therefore, the related art needs to be improved.

### SUMMARY

The technical problems to be solved: in view of the shortcomings of the related art, the present disclosure provides a massage device with a replaceable massage head thereof.

The technical solution adopted for solving technical problems of the present disclosure is:
a massage device with a replaceable massage head thereof according to an embodiment of the present disclosure includes:
a housing with an opening formed at least one end thereof;
a seat arranged at the opening and including a hollow receiving room arranged thereon;
a connecting member hermetically arranged at a bottom of the receiving room;
a massage head detachably arranged on the seat and selected to detachably connect with the connecting member; and
a driving member received in the housing and connected with the connecting member to drive the connecting member to partially reciprocate up and down.

Wherein the seat includes a clamping groove formed at an upper end thereof, and the massage head is provided with a clamping portion formed at a bottom end thereof and a clamping block set at an edge of the clamping portion; the massage head sleeved around the upper end of the seat through the clamping portion, and the clamping block engaged with the clamping groove to fix the massage head and the seat.

Wherein a connecting portion is received in the massage head, at least one first magnet arranged at a bottom of the connecting portion, at least one second magnet arranged on the connecting member, the connecting portion inserted into the receiving room, and the first magnet magnetically attracted to the second magnet.

Wherein the driving member includes a motor, an eccentric wheel, an eccentric shaft and a pushing rod, one end of the eccentric wheel fixedly connected with an output shaft of the motor and rotating along with a rotation of the motor, the other end of the eccentric wheel connected with the eccentric shaft, the eccentric shaft rotating eccentrically along with the rotation of the eccentric wheel, one end of the pushing rod sleeved around the eccentric shaft and connected with the pushing rod for relative rotation, the other end of the pushing rod in transmission connection with the bottom of the connecting member, and the eccentric shaft eccentrically rotating to drive the connecting member to reciprocate up and down.

Wherein the pushing rod includes a post formed at a middle thereof, a sleeve arranged at a bottom of the post and a convex cap arranged at a top of the post, wherein the sleeve is hollow to install the eccentric shaft therein and drive the eccentric shaft to rotate relative to the sleeve, and the convex cap is connected to a bottom of the connecting member in a transmission way.

Wherein a clamping cavity is formed at the bottom of the connecting member, and the convex cap is embedded into the clamping cavity to fix within the clamping cavity.

Wherein the housing includes a hard inner shell with an inner cavity and a soft outer shell covering on the hard inner shell, the hard inner shell including a plurality of buckle grooves formed around the opening, and the seat including a plurality of hooks engaged with the plurality of buckle grooves to connect the seat and the hard inner shell.

Wherein a baffle is arranged on a middle of the seat and in contact with an upper end of the soft outer shell, a plurality of limiting blocks arranged on a lower end surface of the baffle, and the soft outer shell including a plurality of limiting grooves arranged around the opening, the plurality of limiting blocks fixed with the plurality of limiting grooves correspondingly.

Wherein an upper end surface of the massage head is concave inward to form an air cavity, and a through-hole is provided at a bottom of the air cavity and connected to the receiving room.

Wherein the upper end surface of the massage head is closed, and a massage protrusion is arranged on the closed surface of the massage head.

The massage device of the present disclosure is provided that the massage head can be detachably installed on the seat, so that users can replace the massage heads in different modes according to the needs by disassembling the massage head, so that the massage device can provide different massage functions to meet different needs, with a strong practicality.

### BRIEF DESCRIPTION OF THE DRAWINGS

FIG. 1 is a schematic view of a massage device with a replaceable massage head thereof in accordance with an embodiment of the present disclosure.
FIG. 2 is an exploded, schematic view of the massage device of FIG. 1.
FIG. 3 is a cross sectional view of the massage device of a first embodiment of the present disclosure.
FIG. 4 is a cross sectional view of the massage device of a second embodiment of the present disclosure.
FIG. 5 is an exploded, schematic view of a driving member of the massage device of FIG. 1.
FIG. 6 is an exploded, schematic view of a housing of the massage device of FIG. 1.
FIG. 7 is a schematic view of a seat of the massage device of FIG. 1..

The element labels according to the exemplary embodiment of the present disclosure shown as below:
100 massage device, 10 housing, 11 opening, 12 hard inner shell, 13 soft outer shell, 14 buckle groove, 15 limiting groove, 20 seat, 21 receiving room, 22 clamping groove, 23 hook, 24 baffle, 25 limiting block, 30 connecting member, 31 second magnet, 32 clamping cavity, 40 massage head, 41 clamping portion, 42 clamping block, 43 connecting portion, 44 first magnet, 45 air cavity, 46 through-hole, 47 massage protrusion, 50 driving member, 51 motor, 52 eccentric wheel, 53 eccentric shaft, 54 pushing rod, 541 post, 542 sleeve, 543 convex cap, 55 bearing.

### DETAILED DESCRIPTION

Reference will now be made in detail to embodiments, examples of which are illustrated in the accompanying drawings. In the following detailed description, numerous specific details are set forth in order to provide a thorough understanding of the subject matter presented herein. Obviously, the implementation embodiment in the description is a part of the present disclosure implementation examples, rather than the implementation of all embodiments, examples. According to the described embodiment of the present disclosure, all other embodiments obtained by one of ordinary skill in the related art on the premise of no creative work are within the protection scope of the present disclosure.

In the description of the present disclosure, it needs to be explained that all the directional indicators (such as the terms: "upper", "below", "left", "right", "front", "back"...), are shown in the specification of the present disclosure. The indicated orientation or position of the terms shown in the detailed description is based on the orientation or position shown in the figures of the accompanying drawings of the present disclosure, which is only to easily simplify the description of the present disclosure, but not indicated that the devices or elements of the present disclosure should have a particular orientation or should be designed and operated in a particular orientation. So the terms illustrated in the detail description are not by way of the limitation of the present disclosure.

In the description of the present disclosure, except where specifically otherwise illustrated or limited, the terms "connect" and "link" used herein should be understood in a broad sense. Such as, the meaning may be tight connection, removable connection, or integrated connection. The meaning may also be mechanical connection, electrical connection, direct connection or indirect connection through intermediaries, or internal connection within two elements. The meaning of the terms used herein may be understood by one of ordinary skill in the related art according to specific conditions of the present disclosure.

Furthermore, in the description of the present disclosure, the terms such as "first" and "second" shown in the specification are only used to describe, but not indicated that the elements of the present disclosure is important or represented the amount of the elements. That is, the features limited by the terms of "first" and "second" may explicitly or implicitly include one or more features.

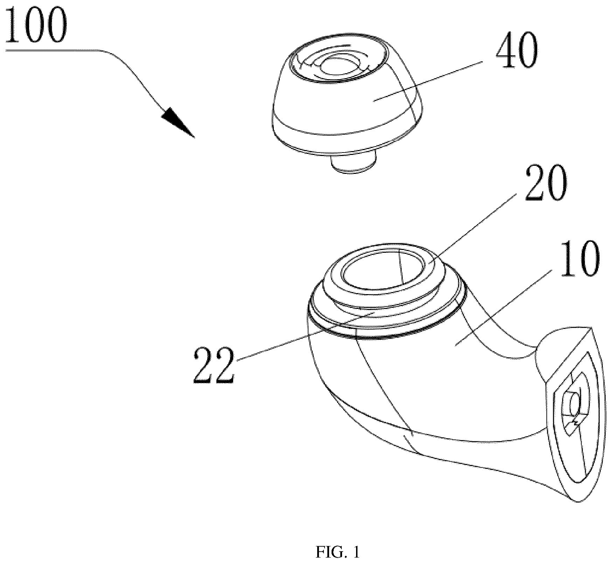

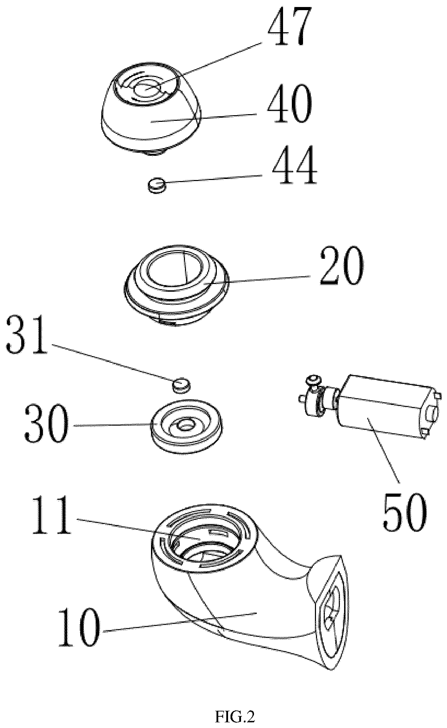

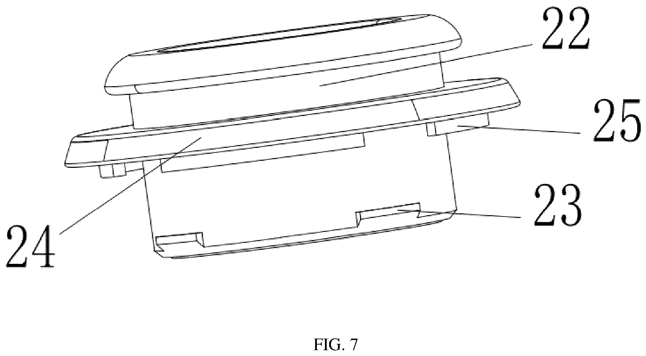

Referring to FIG. 1 to FIG. 7, a massage device 100 with a replaceable massage heads 40 thereof includes:
a housing 10 with an opening 11 formed at least one end thereof;
a seat 20 arranged at the opening 11 and including a hollow receiving room 21 arranged thereon;
a connecting member 30 hermetically arranged at a bottom of the receiving room 21;
the massage head 40 detachably arranged on the seat 20 and detachably connected with the connecting member 30, that is, the massage head 40 can be selected to connect with the connecting member 30 or not connect with the connecting member 30; and
a driving member 50 received in the housing 10 and connected with the connecting member 30 to drive the connecting member 30 to partially reciprocate up and down.

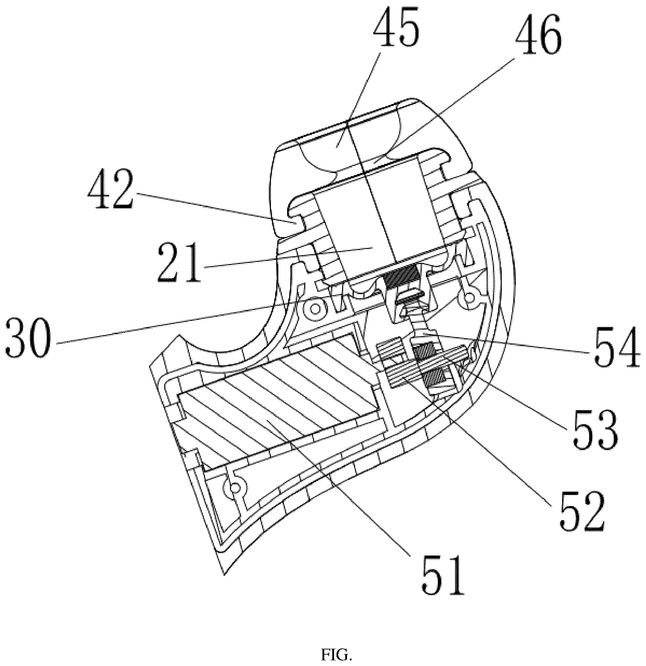

As a first embodiment, referring to FIG. 3, an upper end surface of the massage head 40 is concave inward to form an air cavity 45, and a through-hole 46 is provided at a bottom of the air cavity 45 and connected to the receiving room 21. At this time, the massage head 40 is not in contact with the connecting member 30.

When the massage head 40 is attached to a user's skin, the periphery of the massage head 40 can achieve a sealing effect with the user's skin. At this time, a part of the connecting member 30 will reciprocate up and down under a force of the driving member 50, result in squeezing air in the receiving room 21 and the air cavity 45, thereby achieving a negative pressure adsorption massage effect.

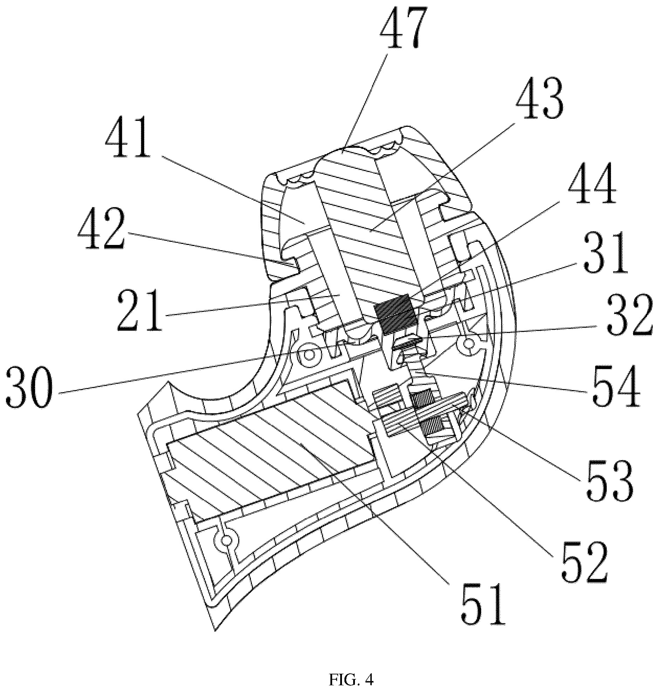

As a second embodiment, referring to FIG. 4, the upper end surface of the massage head 40 is closed, and a massage protrusion 47 is arranged on the closed surface of the massage head 40. At this time, the massage head 40 is in contact with the connecting member 30, and the driving member 50 drives the connecting member to partially reciprocate up and down, so that the massage protrusion 47 is driven to reciprocate up and down, thereby achieving an effect of pressing and tapping massage.

The massage protrusion 47 can be divided into a structure that is higher than a surface of the massage head 40, or lower than the surface of the massage head 40, or flush with the surface of the massage head 40. When the massage protrusion 47 is set as a structure that is higher than the surface of the massage head 40, which can achieve a deep squeezing massage effect.

The massage device 100 of the present disclosure is provided that the massage head 40 can be detachably installed on the seat 20, so that users can replace the massage heads 40 in different modes according to the needs by disassembling the massage head 40, so that the massage device 100 can provide different massage functions to meet different needs, with a strong practicality.

In an embodiment of the present disclosure, the massage head 40 is made of stretchable elastic materials such as a silicone, which has advantages of a good elasticity and a hand feeling rather than harming the skin of the human body, and has a good massage effect. The connecting member 30 can be made of a soft elastic material, so that the connecting member 30 can reciprocate up and down under an action of the driving member 50.

Furthermore, the seat 20 includes a clamping groove 22 formed at an upper end thereof, and the massage head 40 is provided with a clamping portion 41 formed at a bottom end thereof and a clamping block 42 set at an edge of the clamping portion 41; the massage head 40 sleeved around the upper end of the seat 20 through the clamping portion 41, and the clamping block 42 engaged with the clamping groove 22 to fix the massage head 40 and the seat 20. In this way, the assembly is convenient and quick, and meanwhile, the connection stability is strong.

In the embodiment, a connecting portion 43 is received in the massage head 40, and the connecting portion 43 of the present disclosure is in a columnar structure, the massage protrusion 47 disposed corresponding to the upper end of the connecting portion 43. At least one first magnet 44 is arranged at a bottom of the connecting portion 43, at least one second magnet 31 arranged on the connecting member 30, the connecting portion 43 inserted into the receiving room 21, and the first magnet 44 magnetically attracted to the second magnet 31, thereby facilitating installation and detachment, and having good connection stability.

In the embodiment, the connecting member 30 moves up and down under the action of the driving member to drive the connecting portion 43 and the massage protrusion 47 to move up and down, thereby achieving the massage effect.

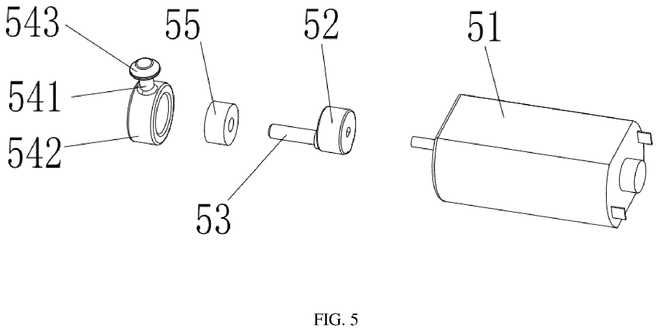

Referring to FIG. 5, the driving member 50 includes a motor 51, an eccentric wheel 52, an eccentric shaft 53 and a pushing rod 54, one end of the eccentric wheel 52 fixedly connected with an output shaft of the motor 51 and rotating along with a rotation of the motor 51, the other end of the eccentric wheel 52 connected with the eccentric shaft 53, the eccentric shaft 53 rotating eccentrically along with the rotation of the eccentric wheel 52, one end of the pushing rod 54 sleeved around the eccentric shaft 53 and connected with the pushing rod 54 for relative rotation, the other end of the pushing rod 54 in transmission connection with the bottom of the connecting member 30, and the eccentric shaft 53 eccentrically rotating to drive the connecting member 30 to reciprocate up and down.

In the embodiment, the eccentric shaft 53 is rotatably connected to the pushing rod 54 through a bearing 55.

Due to an eccentric rotation of the eccentric wheel 52, the eccentric shaft 53 will have a trajectory of up and down movement. As the eccentric shaft 53 can rotate relative to the bottom of the pushing rod 54, the trajectory of up and down movement of the eccentric shaft 53 pushes the pushing rod 54 to reciprocate up and down, so that the middle of the connecting member 30 is driven to move up and down.

The pushing rod 54 includes a post 541 formed at a middle thereof, a sleeve 542 arranged at a bottom of the post 541 and a convex cap543 arranged at a top of the post 541, wherein the sleeve 542 is hollow to install the eccentric shaft 53 therein and drive the eccentric shaft 53 to rotate relative to the sleeve 542, and the convex cap 543 is connected to a bottom of the connecting member 30 in a transmission way.

Furthermore, a clamping cavity 32 is formed at the bottom of the connecting member 30, and the convex cap 543 is embedded into the clamping cavity 32 to fix within the clamping cavity 32, so that the connection stability of the connecting member 30 and the pushing rod 54 is improved, and the connecting member 30 is ensured to move up and down under the action of the pushing rod 54.

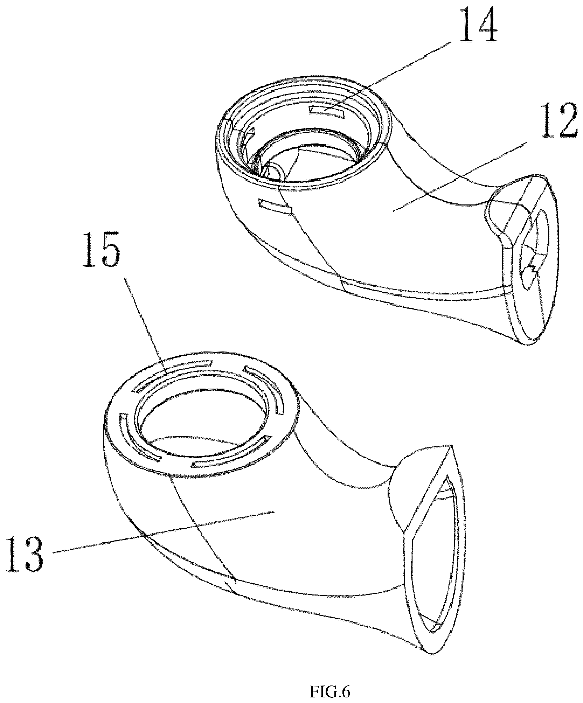

Referring to FIG. 6, the housing 10 includes a hard inner shell 12 with an inner cavity and a soft outer shell 13 covering on the hard inner shell 12, wherein the soft outer housing 13 is made of a stretchable elastic material such as silicone rubber, so as not to hurt the skin of the human body. The hard inner shell 12 includes a plurality of buckle grooves 14 formed around the opening 11, and the seat 20 includes a plurality of hooks 23 engaged with the plurality of buckle grooves 14 to connect the seat 20 and the hard inner shell 12, so as to improve the mounting stability thereof, and prevent the seat 20 from being mutually detached from the hard inner shell 12.

Furthermore, a baffle 24 is arranged on a middle of the seat 20 and in contact with an upper end of the soft outer shell 13, so as to prevent the seat 20 from sliding into the opening 11, a plurality of limiting blocks 25 arranged on a lower end surface of the baffle 24, and the soft outer shell 13 including a plurality of limiting grooves 15 arranged around the opening 11, the plurality of limiting blocks 25 fixed with the plurality of limiting grooves 15 correspondingly. During installation, the plurality of limiting blocks 25 can be aligned with the plurality of limiting grooves 15 correspondingly and then inserted into the plurality of limiting grooves 15 correspondingly for being fixed, which serves as a limiting role to prevent the seat 20 from deviating left and right from positions of the seat 20.

In the embodiment, a circuit board and a battery can be provided in the hard inner shell 12 for supplying power the driving member 50, or an external power supply device can be connected for performing power control.

The specific embodiments of the present disclosure are described in detail above in combination with the accompanying drawings, but not limited to the above embodiments. Various changes can also be made within the knowledge of an ordinary skilled person in the art without departing from the purpose of the present disclosure, each feature or element can be used alone or in other various combinations within the principles of the present disclosure to the full extent indicated by the broad general meaning of the terms in which the appended claims are expressed.

## Claims

1. A massage device with a replaceable massage head thereof comprising:
a housing with an opening formed at least one end thereof;
a seat arranged at the opening and comprising a hollow receiving room arranged thereon;
a connecting member hermetically arranged at a bottom of the receiving room;
a massage head detachably arranged on the seat and selected to detachably connect with the connecting member; and
a driving member received in the housing and connected with the connecting member to drive the connecting member to partially reciprocate up and down.

2. The massage device as claimed in claim 1, wherein the seat comprises a clamping groove formed at an upper end thereof, and the massage head is provided with a clamping portion formed at a bottom end thereof and a clamping block set at an edge of the clamping portion; the massage head sleeved around the upper end of the seat through the clamping portion, and the clamping block engaged with the clamping groove to fix the massage head and the seat.

3. The massage device as claimed in claim 1, wherein a connecting portion is received in the massage head, at least one first magnet arranged at a bottom of the connecting portion, at least one second magnet arranged on the connecting member, the connecting portion inserted into the receiving room, and the first magnet magnetically attracted to the second magnet.

4. The massage device as claimed in claim 1, wherein the driving member comprises a motor, an eccentric wheel, an eccentric shaft and a pushing rod, one end of the eccentric wheel fixedly connected with an output shaft of the motor and rotating along with a rotation of the motor, the other end of the eccentric wheel connected with the eccentric shaft, the eccentric shaft rotating eccentrically along with the rotation of the eccentric wheel, one end of the pushing rod sleeved around the eccentric shaft and connected with the pushing rod for relative rotation, the other end of the pushing rod in transmission connection with the bottom of the connecting member, and the eccentric shaft eccentrically rotating to drive the connecting member to reciprocate up and down.

5. The massage device as claimed in claim 4, wherein the pushing rod comprises a post formed at a middle thereof, a sleeve arranged at a bottom of the post and a convex cap arranged at a top of the post, wherein the sleeve is hollow to install the eccentric shaft therein and drive the eccentric shaft to rotate relative to the sleeve, and the convex cap is connected to a bottom of the connecting member in a transmission way.

6. The massage device as claimed in claim 5, wherein a clamping cavity is formed at the bottom of the connecting member, and the convex cap is embedded into the clamping cavity to fix within the clamping cavity.

7. The massage device as claimed in claim 1, wherein the housing comprises a hard inner shell with an inner cavity and a soft outer shell covering on the hard inner shell, the hard inner shell comprising a plurality of buckle grooves formed around the opening, and the seat comprising a plurality of hooks engaged with the plurality of buckle grooves to connect the seat and the hard inner shell.

8. The massage device as claimed in claim 7, wherein a baffle is arranged on a middle of the seat and in contact with an upper end of the soft outer shell, a plurality of limiting blocks arranged on a lower end surface of the baffle, and the soft outer shell comprising a plurality of limiting grooves arranged around the opening, the plurality of limiting blocks fixed with the plurality of limiting grooves correspondingly.

9. The massage device as claimed in claim 1, wherein an upper end surface of the massage head is concave inward to form an air cavity, and a through-hole is provided at a bottom of the air cavity and connected to the receiving room.

10. The massage device as claimed in claim 1, wherein the upper end surface of the massage head is closed, and a massage protrusion is arranged on the closed surface of the massage head.
